# EUROPEAN PATENT SPECIFICATION

(11) **EP 4 035 869 B1**
(45) Date of publication and mention of the grant of the patent: **02.07.2025**
(21) Application number: 20867844.1
(22) Date of filing: 18.09.2020
(51) Int. Cl.: B29C 49/64, B29C 49/06, B29C 49/42

(54) **BLOW MOLDING DEVICE AND BLOW MOLDING METHOD**
BLASFORMVORRICHTUNG UND BLASFORMVERFAHREN
DISPOSITIF ET PROCÉDÉ DE MOULAGE PAR SOUFFLAGE

(30) Priority: 25.09.2019 JP 2019173693
(43) Date of publication of application: 03.08.2022
(73) Proprietor: NISSEI ASB MACHINE CO., LTD., Komoro-shi, Nagano 384-8585 (JP)
(72) Inventor: HORIGOME Hiroshi, Komoro-shi, Nagano 384-8585 (JP); MIYAZAWA Masaya, Komoro-shi, Nagano 384-8585 (JP)
(74) Representative: Mewburn Ellis LLP
(86) International application number: PCT/JP2020/035527
(87) International publication number: WO 2021/060196

(56) References cited:
- JP-A- 2017 087 651
- JP-A- 2017 524 572
- JP-B1- 6 505 344
- JP-B2- 3 330 672
- JP-B2- 3 370 124
- JP-B2- 3 467 341

## Description

### Technical Field

The present invention relates to a blow molding apparatus and a blow molding method.

### Background Art

A hot parison type blow molding apparatus has been conventionally known as one of apparatuses for manufacturing a resin container. The hot parison type blow molding apparatus is configured to blow-mold a resin container using residual heat generated in injection molding of a preform, and is advantageous in that it is possible to manufacture resin containers with varieties and excellence in aesthetic appearance as compared with a cold parison type.

For example, various proposals have been made for a hot parison type blow molding cycle for the purpose of shortening the molding cycle. In order to shorten these molding cycles, it has been proposed to shorten an injection molding time of the preform in a rate-determining stage (cooling time of the preform in an injection mold), and to additionally cool the preform having high heat in a downstream step (a temperature adjusting step) after the injection molding (see, for example, Patent Literature 1). In additionally cooling the preform having a high temperature in the temperature adjusting step after the injection molding, a method is also known in which heat exchange is conducted by bringing an outer circumferential surface of the preform into contact with a cooling mold, and compressed air is made to flow into the preform to cool the preform.

In addition, in this type of blow molding apparatus, for example, in order to prevent opening of a mold by blow air used for shaping a container and floating of a transport plate (also referred to as a rotary plate), it has also been proposed to provide a lock mechanism in a driving apparatus of a blow molding mold (see, for example, Patent Literatures 2 and 3).

JP3330672B2 discloses an injection stretching blow molding machine.

JP6505344B1 discloses a manufacturing method for a resin container.

JP3370124B2 discloses a blow molder.

JP3467341B2 discloses a blow molding machine.

### Citation List

### Patent Literature

Patent Literature 1: JP 6505344 B1
Patent Literature 2: JP 3370124 B2
Patent Literature 3: JP 3467341 B2

### Summary of Invention

### Technical Problem

In a case of shortening the cooling time of the preform in the injection mold to shorten the molding cycle of the container, it is important to shorten the operation time (dry cycle) of a machine (in particular, a machine related to a temperature adjusting apparatus) as much as possible before and after cooling the preform, and to ensure a sufficient time for cooling the preform in the temperature adjusting apparatus.

In addition, when the compressed air is made to flow into the preform to cool the preform in a temperature adjusting step after the injection molding, a temperature adjusting mold may be opened vertically by the compressed air introduced into the preform. In a case where the actuator of the temperature adjusting apparatus is upsized in order to suppress such opening of the mold, the driving speed of the temperature adjusting apparatus may become lower and the operation time of the apparatus may be longer, and the time while the preform can be cooled by the temperature adjusting apparatus is reduced accordingly.

Therefore, the present invention has been made in view of such issues, and has an object to provide a blow molding apparatus capable of shortening the operation time of the machine before and after cooling the preform.

### Solution to Problem

A blow molding apparatus according to one aspect of the present invention includes: an injection molding unit configured to injection-mold a preform having a bottomed shape and made of a resin; a temperature adjusting unit configured to perform a temperature adjustment of the preform by supplying the preform that has been released from the injection molding unit with cooling air; and a blow molding unit configured to blow-mold the preform after the temperature adjustment to manufacture a container made of the resin. The temperature adjusting unit includes: a first drive unit configured to drive a core mold, from which the cooling air is supplied, in a first direction to insert the core mold into the preform; a second drive unit configured to drive a cavity mold that accommodates the preform in a second direction opposite to the first direction to accommodate the preform in the cavity mold; a first lock portion configured to restrict a movement of the first drive unit in the second direction at a first position where the core mold is inserted into the preform; and a second lock portion configured to restrict a movement of the second drive unit in the first direction at a second position where the preform is accommodated in the cavity mold.

### Advantageous Effects of Invention

According to the present invention, the operation time of the machine can be shortened before and after cooling the preform.

### Brief Description of Drawings

Fig. 1 is a diagram schematically illustrating a configuration of a blow molding apparatus in the present embodiment.
Fig. 2 is a view illustrating a configuration example of a temperature adjusting unit.
Fig. 3 is a diagram illustrating a configuration of a first drive unit of the temperature adjusting unit.
Fig. 4 is a view illustrating a first lock portion of the first drive unit.
Fig. 5 is a diagram illustrating a configuration of a second drive unit of the temperature adjusting unit.
Fig. 6 is a view illustrating a second lock portion of the second drive unit.
Fig. 7 is a flowchart illustrating steps of a blow molding method.
Fig. 8 is a graph illustrating an example of temperature changes of a preform in the blow molding method in the present embodiment and those of a comparative example.

### Description of Embodiments

Hereinafter, embodiments of the present invention will be described with reference to the drawings.

In the embodiments, in order to facilitate understanding, structures and elements other than the main parts of the present invention will be described in a simplified or omitted manner. In addition, in the drawings, the same elements are denoted by the same reference numerals. Note that the shapes, dimensions, and the like of the respective elements illustrated in the drawings are schematically illustrated, and do not indicate actual shapes, dimensions, or the like.

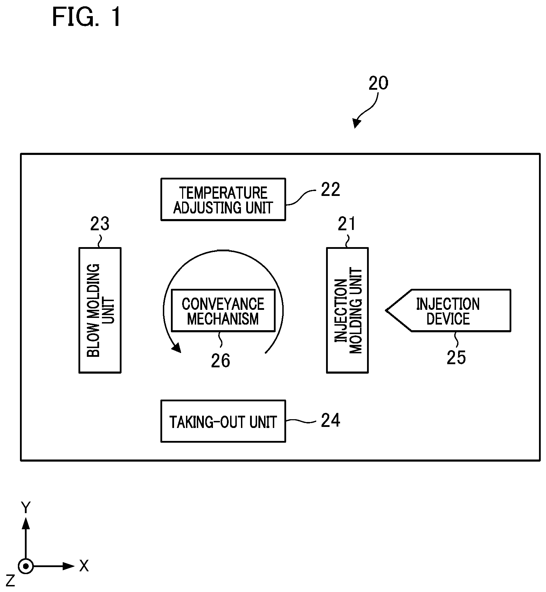

Fig. 1 is a diagram schematically illustrating a configuration of a blow molding apparatus 20 in the present embodiment. The blow molding apparatus 20 in the present embodiment is a hot parison type (also referred to as a single-stage type) apparatus that blow-molds a container by utilizing residual heat (internal heat quantity) from the injection molding without cooling a preform 11 (not illustrated in Fig. 1) to room temperature.

The blow molding apparatus 20 includes an injection molding unit 21, a temperature adjusting unit 22, a blow molding unit 23, a taking-out unit 24, and a conveyance mechanism 26. The injection molding unit 21, the temperature adjusting unit 22, the blow molding unit 23, and the taking-out unit 24 are respectively disposed at positions rotated by a predetermined angle (for example, 90 degrees) around the conveyance mechanism 26.

### (Conveyance mechanism 26)

The conveyance mechanism 26 includes a rotary plate 26a (not illustrated in Fig. 1) that rotates about an axis (Z direction) in a direction perpendicular to the sheet surface of Fig. 1. The rotary plate is made up of a single disk-shaped flat plate member or a plurality of substantially fan-shaped flat plate members divided for every molding station. On the rotary plate 26a, one or more neck molds 27 (not illustrated in Fig. 1) for holding the preform 11 or a resin container (hereinafter, simply referred to as a container) are arranged at every predetermined angle. The conveyance mechanism 26 includes a rotation mechanism, not illustrated, and rotates the rotary plate 26a to convey the preform 11 (or the container), the neck portion of which is held by the neck mold 27, to the injection molding unit 21, the temperature adjusting unit 22, the blow molding unit 23, and the taking-out unit 24 in this order. Note that the conveyance mechanism 26 further includes an elevation mechanism (a mechanism for opening and closing a mold vertically) and a neck mold opening mechanism, and also performs an operation of lifting up and down the rotary plate 26a and an operation related to mold closing and mold opening (mold releasing) of the preform 11 in the injection molding unit 21.

### (Injection molding unit 21)

The injection molding unit 21 includes an injection cavity mold and an injection core mold, the respective illustrations of which are omitted, and manufactures the preform 11. An injection device 25 that supplies a resin material, which is a raw material of the preform 11, is connected with the injection molding unit 21.

In the injection molding unit 21, the injection cavity mold, the injection core mold, and the neck mold 27 of the conveyance mechanism 26, which have been described above, are closed to form a preform-shaped mold space. Then, the resin material is poured from the injection device 25 into such a preform-shaped mold space, and thus the preform 11 is manufactured by the injection molding unit 21.

Here, the entire shape of the preform 11 is a bottomed cylindrical shape in which one end side is opened and the other end side is closed. The neck portion is formed at an end of the preform 11 on the opened side.

Further, the materials of the container and the preform 11 include a thermoplastic synthetic resin, and can be appropriately selected according to the use of the container. Specific examples of the materials include PET (polyethylene terephthalate), PEN (polyethylene naphthalate), PCTA (polycyclohexanedimethylene terephthalate), Tritan (Tritan: copolyester), PP (polypropylene), PE (polyethylene), PC (polycarbonate), PES (polyethersulfone), PPUS (polyphenylsulfone), PS (polystyrene), COP/COC (cyclic olefin-based polymer), PMMA (polymethyl methacrylate: acrylic), PLA (polylactic acid), and the like.

Note that even when the injection molding unit 21 is opened, the neck mold 27 of the conveyance mechanism 26 is not released, and the preform 11 is held and conveyed as it is. The number of the preforms 11 simultaneously molded by the injection molding unit 21 (that is, the number of containers that can be simultaneously molded by the blow molding apparatus 20) can be appropriately set. As an example, in the present embodiment, it is assumed that four preforms 11 are conveyed in one molding cycle.

### (Temperature adjusting unit 22)

The temperature adjusting unit 22 equalizes the temperatures or removes the uneven temperature in the preform 11 that has been manufactured by the injection molding unit 21, and adjusts the temperature of the preform 11 to a temperature suitable for blow molding (for example, about 90°C to 105°C). The temperature adjusting unit 22 also has a function of cooling the preform 11 in a high temperature state after the injection molding.

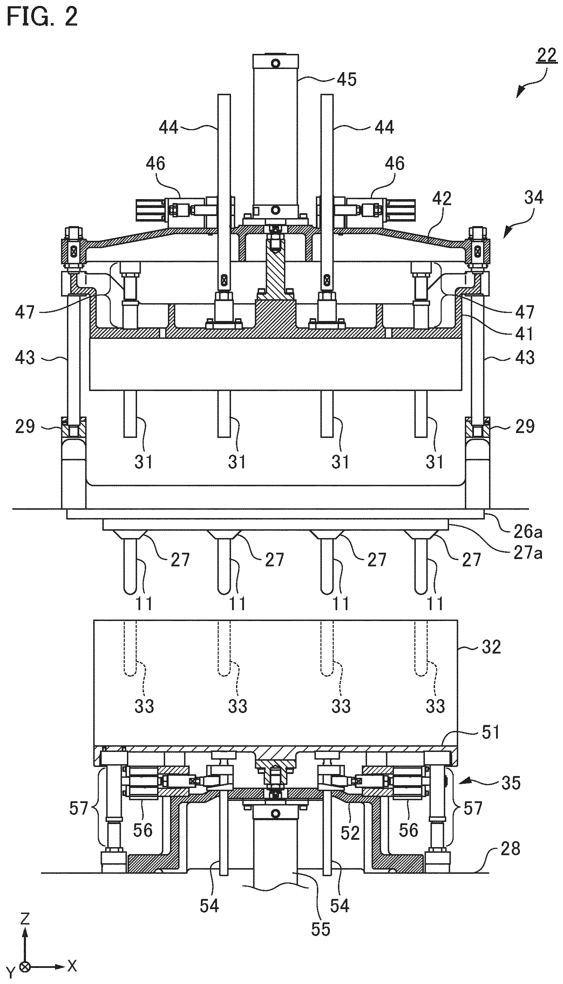

Fig. 2 is a view illustrating a configuration example of the temperature adjusting unit 22.

The temperature adjusting unit 22 includes a core mold 31 (air introducing and discharging core, or temperature adjusting core) inserted into (or abutting) the preform 11, and a cavity mold 32 (temperature adjusting pot) having a temperature adjusting space 33 capable of accommodating the preform 11. In addition, the temperature adjusting unit 22 includes a first drive unit 34 that drives the core mold 31 in the vertical direction (Z direction) of Fig. 2, and a second drive unit 35 that drives the cavity mold 32 in the vertical direction (Z direction) of Fig. 2.

In the example of Fig. 2, four preforms 11 are held on the rotary plate 26a by the four neck molds 27 provided on a neck mold fixed plate 27a attached to a lower surface of the rotary plate 26a. The temperature adjusting unit 22 is provided with four core molds 31 and four temperature adjusting spaces 33 of the cavity mold 32. The positions of the core molds 31 and the temperature adjusting spaces 33 are respectively opposite (corresponding) to the positions of the preforms 11 on XY plane.

Further, the core molds 31 and the first drive unit 34 are disposed on an upper side (for example, an upper base) of the rotary plate 26a, and the cavity mold 32 and the second drive unit 35 are disposed on a lower side (for example, a machine bed (a lower base)) of the rotary plate 26a.

The core mold 31 is a cylindrical mold member extending in the vertical direction (Z direction) in Fig. 2, and includes an air supply path (not illustrated) for introducing compressed air (cooling air) for the cooling blow into the preform 11, and an exhaust path (not illustrated) for exhausting the cooling air from the preform 11. Note that the cooling blow is a process of continuously causing the compressed air to flow at equal to or lower than normal temperature (20°C) into the inside (a hollow body portion) of the preform 11, and cooling the preform 11 from its inner side (an inner surface) by convection of the compressed air.

Each core mold 31 is attached to a lower surface of the first drive unit 34 (specifically, a first movable plate 41 to be described later), and is movable in the vertical direction (Z direction) of Fig. 2 by the operation of the first drive unit 34. In addition, the core mold 31 is configured to be in close contact with an inner circumference of the neck portion when inserted into the preform 11, and to maintain airtightness with the preform 11.

The cavity mold 32 is attached to an upper surface side of the second drive unit 35, and is movable in the vertical direction (Z direction) of Fig. 2 by the operation of the second drive unit 35. In addition, an opening of the temperature adjusting space 33 is present at an upper surface of the cavity mold 32.

The temperature adjusting space 33 of the cavity mold 32 has substantially the same shape as the outer shape of the preform 11 that has been manufactured by the injection molding unit 21. A flow path (not illustrated) along which a temperature adjusting medium flows is formed in the inside of the cavity mold 32. Therefore, the temperature of the cavity mold 32 is maintained at a predetermined temperature by the temperature adjusting medium.

Note that the cavity mold 32 may be configured with, for example, a pair of split molds that are divided along the longitudinal direction of the preform and that open and close in Y direction in the drawing.

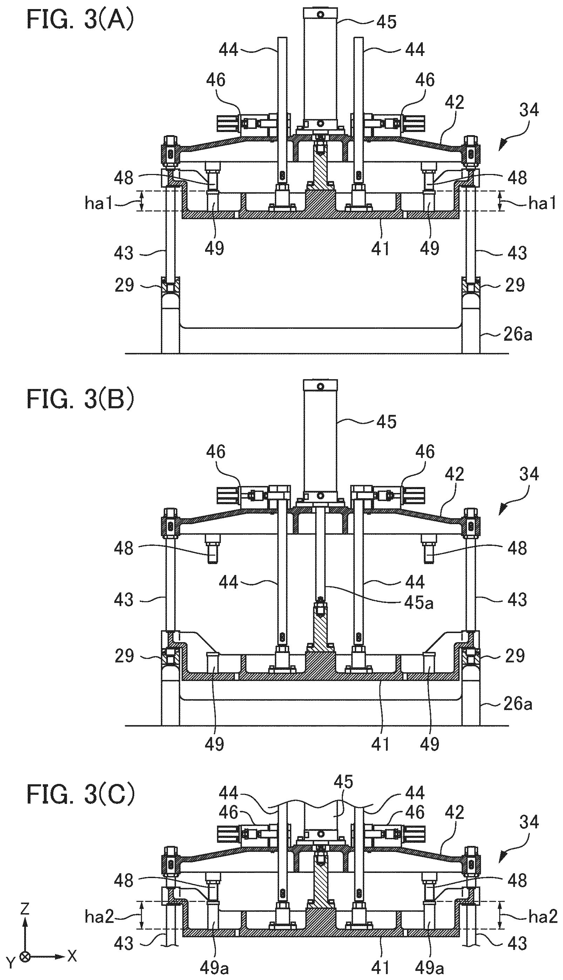

Next, a configuration of the first drive unit 34 of the temperature adjusting unit 22 will be described. Fig. 3 is a view illustrating the first drive unit 34. In Fig. 3, the illustrations of the core molds 31 are omitted for the sake of simplicity.

The first drive unit 34 includes a first movable plate 41, a first fixed plate 42, a shaft 43, a first rod 44, a first drive cylinder 45, a first lock portion 46, and a first stroke changing portion 47.

At least two (preferably four) shafts 43 are attached to a lower side of the first fixed plate 42 in the first drive unit 34. Fig. 3 illustrates only a pair of left and right shafts 43. The shaft 43 extends in the vertical direction from an upper base 29 fixed at a predetermined height with respect to a machine bed 28. The first fixed plate 42 is supported by the shafts 43, in a state of being fixed at a predetermined height from the upper base 29. In addition, the first drive cylinder 45 facing downward is attached to the first fixed plate 42, and a pair of first rods 44 extending in the vertical direction are inserted through the first fixed plate 42.

The first movable plate 41 is disposed below the first fixed plate 42. Each shaft 43 is inserted into the first movable plate 41, and the first movable plate 41 is movable in the vertical direction along the shafts 43. In addition, as illustrated in Fig. 2, the core molds 31 are attached to a lower surface of the first movable plate 41.

A piston rod 45a, which is driven to extend by the first drive cylinder 45, and first rods 44 are fixed to an upper surface of the first movable plate 41. When the piston rod 45a extends with respect to the first drive cylinder 45, the first movable plate 41 moves downward together with the first rods 44, whereas when the piston rod 45a contracts with respect to the first drive cylinder 45, the first movable plate 41 moves upward together with the first rods 44.

Two first lock portions 46 are attached to an upper surface side of the first fixed plate 42. Each of the first lock portions 46 is provided at a position corresponding to the first rod 44, and includes a lock piece 46a that moves forward and backward in a horizontal direction (X direction) in the drawing, and a drive mechanism 46b that drives the lock piece 46a. Note that the configurations of the two first lock portions 46 are similar to each other. Therefore, the configuration of one of them will be described below, and the overlapping description of the other will be omitted.

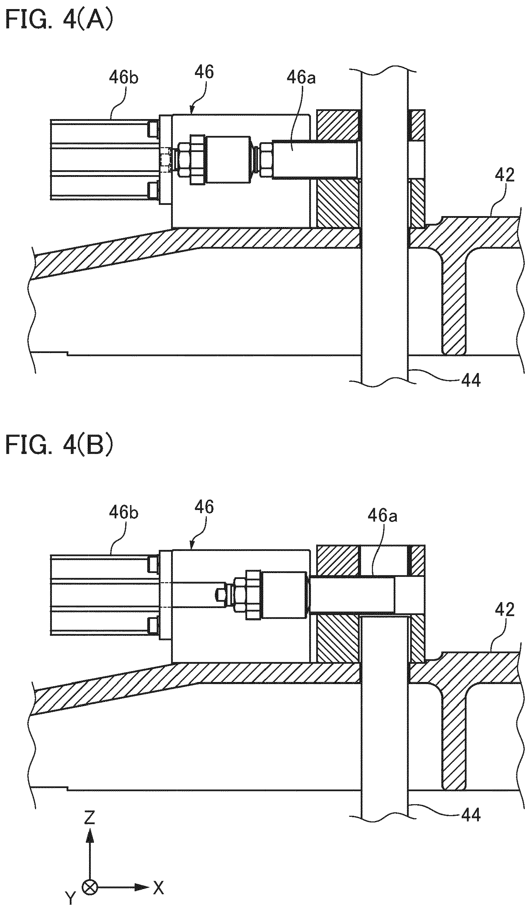

Fig. 4(A) is a view illustrating the first lock portion 46 in an unlocked state, and Fig. 4(B) is a view illustrating the first lock portion 46 in a locked state.

In the unlocked state illustrated in Fig. 4(A), the lock piece 46a of the first lock portion 46 is located at a position retracted from the position of the first rod 44. In such an unlocked state, the first rod 44 does not interfere with the lock piece 46a, and the first movable plate 41 is movable in the vertical direction.

On the other hand, as illustrated in Fig. 3(B), when the first movable plate 41 moves downward (in a first direction) to reach a lower end side of its stroke, an upper end of the first rod 44 is located on a lower side of the position of the lock piece 46a. Although the illustration is omitted, in this state, the core mold 31 is inserted into the preform 11, and the core mold 31 is located at a position abutting the neck portion of the preform 11, and stands still.

In this situation, the lock piece 46a of the first lock portion 46 can be made to move to the position of the first rod 44 so as to be in the locked state illustrated in Fig. 4(B). In such a locked state, when the first movable plate 41 is made to move upward (in a second direction), the upper end of the first rod 44 abuts the lock piece 46a, and an interference occurs. For this reason, in the locked state of the first lock portion 46, the lock piece 46a restricts an upward movement of the first movable plate 41 located on a lower end side of its stroke.

As described above, in the locked state, the upper end of the first rod 44 abuts the lock piece 46a, and the core molds 31 supported by the first movable plate 41 are unable to move. Accordingly, a state in which the core mold 31 abuts (adheres to) the preform 11 supported by the neck mold 27 is formed with certainty, and airtightness is improved. In this state, the cooling air is introduced from the core mold 31 into the preform 11, and the cooling blow is conducted. When the cooling blow is conducted, upward force is generated in the core mold 31, and the core mold 31 easily moves upward from the molding position. However, the upper end of the first rod 44 is firmly supported by the lock piece 46a. Thus, the upward movement of the core mold 31 is suppressed. Therefore, the preform 11 and the core mold 31 are less likely to be separated from each other, and this significantly reduces a possibility of leakage of the cooling air.

Returning to Fig. 3, the first stroke changing portion 47 is provided between the first fixed plate 42 and the first movable plate 41. The first stroke changing portion 47 includes a stopper 48 attached to a lower surface of the first fixed plate 42, and a spacer member 49 attached to the upper surface of the first movable plate 41. The stopper 48 and the spacer member 49 are disposed at opposite (corresponding) positions on XY plane, and are configured such that the stopper 48 and the spacer member 49 are brought into contact with each other, when the first movable plate 41 becomes closer to the first fixed plate 42. In the examples of Figs. 2 and 3, two first stroke changing portions 47 are provided between the first fixed plate 42 and the first movable plate 41.

The stopper 48 is made up of, for example, a shock absorber. An upper surface side of the stopper 48 is fixed to the first fixed plate 42, and a bottom surface side of the stopper 48 receives an upper surface of the spacer member 49.

The spacer member 49 is attached to be replaceable so as to define an upper limit position (stop position when the core mold 31 is retracted) within a movement range of the first movable plate 41. The spacer member 49 is, for example, a block having a rectangular overall shape, and is fixed to the first movable plate 41 with a bolt or the like.

As the spacer member 49, a member having a given height is selectable from a plurality of types with different heights in the vertical direction so that the movement range of the first movable plate 41 has appropriate dimensions for moving the core mold 31 forward and backward. For example, the dimensions of the spacer member 49 are selected so that the core mold 31 completely comes out of the preform 11 at the time of moving backward and does not interfere with the rotary plate 26a, and a movement amount of the core mold 31 is minimized.

As an example, Fig. 3(C) illustrates a state in which a spacer member 49a having a height different from that of Fig. 3(A) is attached. A height ha2 of the spacer member 49a in Fig. 3(C) is larger than a height ha1 of the spacer member 49 in Fig. 3(A) (ha2 > ha1). Accordingly, in the case of Fig. 3(C), the stopper 48 and the spacer member 49a are brought into contact with each other, when the first movable plate 41 is located at a position lower than that in Fig. 3(A). Therefore, the movement range of the first movable plate 41 is reduced. That is, in a case where the preform 11 is short, the movement amount of the core mold 31 is reduced with use of the spacer member 49a that is long, whereas in a case where the preform 11 is long, the movement amount of the core mold 31 is increased with use of the spacer member 49 that is short. With this configuration, the movement amount (stroke amount) of the core mold 31 is optimally adjustable in accordance with the length of the preform 11.

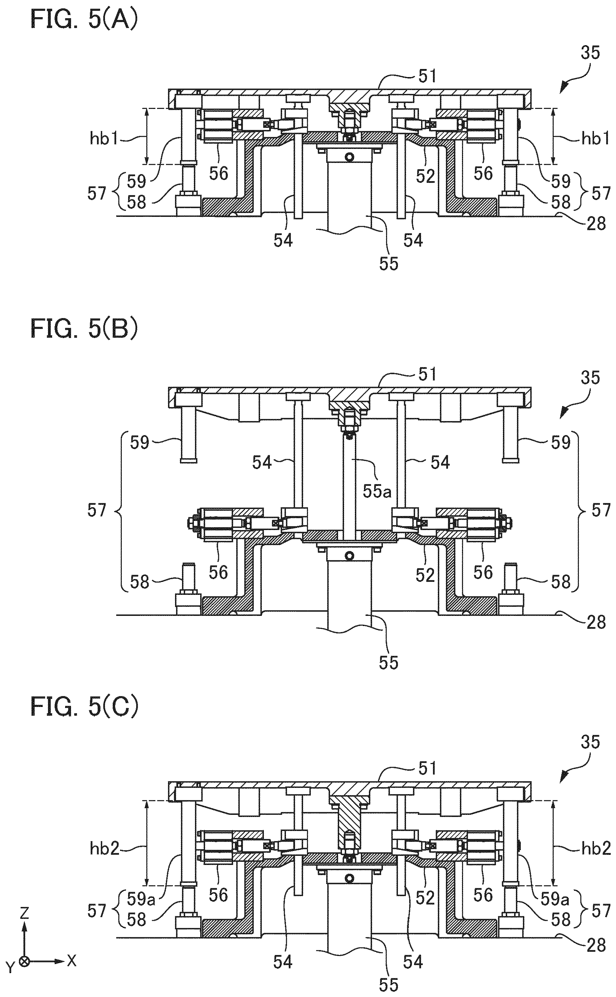

Subsequently, a configuration of the second drive unit 35 of the temperature adjusting unit 22 will be described. Fig. 5 is a diagram illustrating the second drive unit 35. In Fig. 5, the illustration of the cavity mold 32 is omitted for the sake of simplicity.

The second drive unit 35 includes a second movable plate 51, a second fixed plate 52, a second rod 54, a second drive cylinder 55, a second lock portion 56, and a second stroke changing portion 57.

The second fixed plate 52 in the second drive unit 35 is fixed on the machine bed (lower base) 28. The second drive cylinder 55 facing upward is attached to the second fixed plate 52, and at least two (preferably, two pairs of (four)) second rods 54 extending in the vertical direction are inserted through the second fixed plate 52. Fig. 5 illustrates the second drive unit 35 in which two pairs of (four) second rods 54 are provided. In Fig. 5, only one pair of the two pairs of the second rods 54 arranged in parallel in the depth direction (Y direction) in the drawing in the second drive unit 35 is illustrated.

The second movable plate 51 is disposed above the second fixed plate 52. The second movable plate 51 is supported from below by two or more (for example, four) shafts (not illustrated) extending in the vertical direction, and is movable in the vertical direction along the shafts. In addition, as illustrated in Fig. 2, the cavity mold 32 is attached to an upper surface of the second movable plate 51.

A piston rod 55a, which is driven to extend by the second drive cylinder 55, and second rods 54 are fixed to a lower surface of the second movable plate 51. When the piston rod 55a extends with respect to the second drive cylinder 55, the second movable plate 51 moves upward together with the second rod 54, whereas when the piston rod 55a contracts with respect to the second drive cylinder 55, the second movable plate 51 moves downward together with the second rod 54.

Two second lock portions 56 are attached to an upper surface side of the second fixed plate 52. Each of the second lock portions 56 is provided at a position where the second rod 54 is disposed in the horizontal direction (X direction) in the drawing, and includes a lock piece 56a that moves forward and backward in X direction, and a drive mechanism 56b that drives the lock piece 56a. The drive mechanism 56b includes a drive rod 56e, and the drive rod 56e and the lock piece 56a are coupled with each other through a free joint 56d. Note that the configurations of the two second lock portions 56 are similar to each other. Therefore, the configuration of one of them will be described below, and the overlapping description of the other will be omitted.

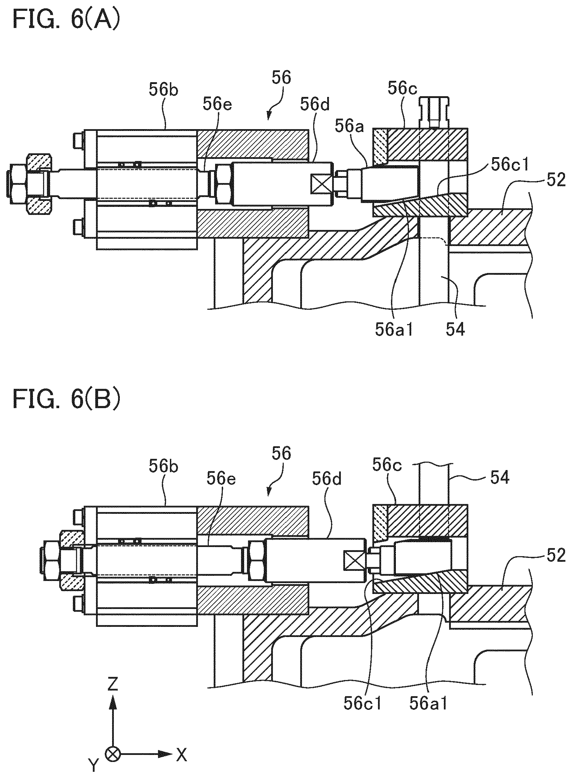

Fig. 6(A) is a view illustrating the second lock portion 56 in an unlocked state, and Fig. 6(B) is a view illustrating the second lock portion 56 in a locked state.

In the unlocked state illustrated in Fig. 6(A), the lock piece 56a of the second lock portion 56 is located at a position retracted from the position of the second rod 54. In such an unlocked state, the second rod 54 does not interfere with the lock piece 56a, and the second movable plate 51 is movable in the vertical direction.

On the other hand, as illustrated in Fig. 5(B), when the second movable plate 51 moves upward (in the second direction) to reach an upper end side of its stroke, a lower end of the second rod 54 is located on an upper side of the position of the lock piece 56a. Although the illustration is omitted, in this state, the preform 11 is accommodated in the cavity mold 32, and the cavity mold 32 is located at a position abutting the neck mold 27, and stands still.

In this situation, the lock piece 56a of the second lock portion 56 can be made to move to the position of the second rod 54 so as to be in the locked state illustrated in Fig. 6(B). In such a locked state, when the second movable plate 51 is made to move downward (in the first direction), the lower end of the second rod 54 abuts the lock piece 56a, and an interference occurs. For this reason, in the locked state of the second lock portion 56, the lock piece 56a restricts a downward movement of the second movable plate 51 located on an upper end side of its stroke.

Here, the basic configuration of the second lock portion 56 is similar to that of the first lock portion 46, but is different in that inclined surfaces are formed on an upper surface side of a receiving portion 56c that receives the lock piece 56a and a lower surface side of the lock piece 56a.

Specifically, a surface 56c1 of the receiving portion 56c that receives the lock piece 56a and a lower surface 56a1 of the lock piece 56a each have a wedge-shaped inclined surface inclined upward in a direction that the lock piece 56a extends. For this reason, as illustrated in Fig. 6(B), when the lock piece 56a of the second lock portion 56 is extended, the surface 56c1 of the receiving portion 56c is pressed against the lower surface 56a1 of the lock piece 56a, upward reaction force is generated, and the movement of the lock piece 56a in the extending direction is converted into upward force. In addition, the free joint 56d is provided between the lock piece 56a and the drive mechanism 56b (drive rod 56e). Therefore, a behavior that the drive mechanism 56b (drive rod 56e) that moves forward and backward in X direction becomes eccentric or inclined in Z direction can be suppressed, and only the lock piece 56a can be smoothly moved in the upward direction by a predetermined amount, while breakage of the drive mechanism 56b is suppressed.

As described above, when the lower end of the second rod 54 is pushed up by the lock piece 56a in the locked state, the cavity mold 32 supported by the second movable plate 51 is also pushed up. Accordingly, a state in which the cavity mold 32 firmly abuts (is in close contact with) the neck mold 27 of the rotary plate 26a is formed. In this state, the preform 11 held by the neck mold 27 is accommodated in the cavity mold 32. Next, the temperature adjusting unit 22 introduces the cooling air into the preform 11 (conducts cooling blow). When the cooling blow is conducted, downward force is generated in the cavity mold 32, and the cavity mold 32 easily moves downward from the molding position. However, the lower end of the second rod 54 is firmly supported by the lock piece 56a. Thus, the downward movement (mold opening) of the cavity mold 32 is suppressed. Therefore, misalignment (core misalignment or the like) hardly occurs between the preform 11 and the cavity mold 32, and a possibility that the preform 11 is brought into contact with the cavity mold 32 in a misaligned state at the time of the cooling blow and an appropriate temperature adjustment cannot be made is largely reduced. Note that the downward force received by the cavity mold 32 caused by the cooling air is transmitted from the lower end of the second rod 54 to the lock piece 56a, and becomes horizontal force to push back the lock piece 56a along the surface 56c1 of the receiving portion 56c. Hence, it is necessary to set the horizontal force of the drive mechanism 56b to be larger than the horizontal force generated in the receiving portion 56c by the cooling air.

Returning to Fig. 5, the second stroke changing portion 57 is provided between the machine bed 28 and the second movable plate 51. The second stroke changing portion 57 includes a stopper 58 attached to the machine bed 28, and a spacer member 59 attached to a lower surface of the second movable plate 51. The stopper 58 and the spacer member 59 are disposed at opposite (corresponding) positions on XY plane, and are configured such that the stopper 58 and the spacer member 59 are brought into contact with each other, when the second movable plate 51 is brought to be closer to the machine bed 28. In the examples of Figs. 2 and 5, two stroke changing portions 57 are provided between the machine bed 28 and the second movable plate 51. Note that the stopper 58 may be provided on the second fixed plate 52 that is contiguous with the machine bed 28 and that supports the second movable plate 51 to be movable.

The stopper 58 is made up of, for example, a shock absorber. A lower surface side of the stopper 58 is fixed to the machine bed 28, and an upper surface side receives a bottom surface of the spacer member 59.

The spacer member 59 is attached to be replaceable so as to define a lower limit position (stop position when the cavity mold 32 is retracted) within a movement range of the second movable plate 51. The spacer member 59 is, for example, a block having a rectangular overall shape, and is fixed to the second movable plate 51 with a bolt or the like.

As the spacer member 59, a member having a given height is selectable from a plurality of types with different heights in the vertical direction so that the movement range of the second movable plate 51 has appropriate dimensions for moving the cavity mold 32 forward and backward. For example, the dimensions of the spacer member 59 are selected so that the preform 11 completely comes out of the cavity mold 32 at the time of moving backward, an interference does not occur, and the movement amount of the cavity mold 32 is minimized.

As an example, Fig. 5(C) illustrates a state in which a spacer member 59a having a different height from that of Fig. 5(A) is attached. A height hb2 of the spacer member 59a in Fig. 5(C) is larger than a height hb1 of the spacer member 59 in Fig. 5(A) (hb2 > hb1). Accordingly, in the case of Fig. 5(C), the stopper 58 and the spacer member 59a are brought into contact with each other, when the second movable plate 51 is located at a position higher than the position in Fig. 5(A). Therefore, the movement range of the second movable plate 51 is reduced. That is, in a case where the preform 11 is short, the movement amount of the cavity mold 32 is reduced with use of the spacer member 59a that is long, whereas in a case where the preform 11 is long, the movement amount of the cavity mold 32 is increased with use of the spacer member 59 that is short. With this configuration, the movement amount (stroke amount) of the cavity mold 32 is optimally adjustable in accordance with the length of the preform 11.

### (Blow molding unit 23)

Returning to Fig. 1, the blow molding unit 23 blow-molds the preform 11, the temperature of which has been adjusted by the temperature adjusting unit 22, to manufacture a container.

The blow molding unit 23 includes blow cavity molds that are a pair of split molds corresponding to the shape of the container, an air introduction member that also serves as a stretching rod (neither of them is illustrated), and an exhaust path (not illustrated in Fig. 1) for exhausting the blow air from the inside of the container. The blow molding unit 23 blow-molds the preform 11 while stretching the preform. Accordingly, the preform 11 can be shaped into a blow cavity shape, and a container can be manufactured.

### (Taking-out unit 24)

The taking-out unit 24 is configured to release the neck portion of the container that has been manufactured by the blow molding unit 23 from the neck mold, and to take out the container to the outside of the blow molding apparatus 20.

### (Description of blow molding method)

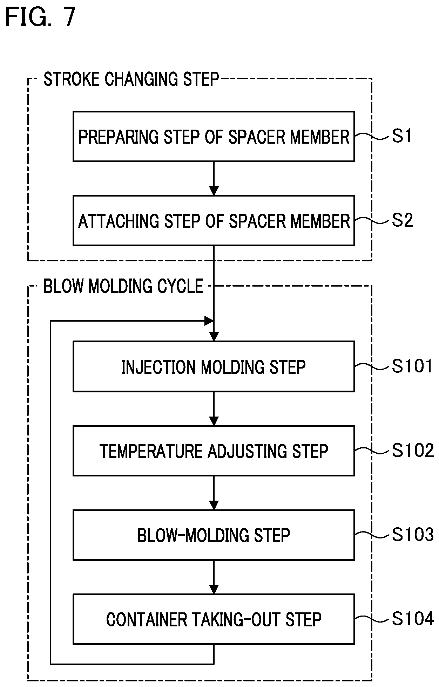

Fig. 7 is a flowchart illustrating steps of a blow molding method performed by the blow molding apparatus 20 in the present embodiment. In the present embodiment, before the respective steps (S101 to S104) to be described later of the blow molding method are performed, a stroke changing step (S1 to S2) of changing the ranges of movements of the first drive unit 34 and the second drive unit 35 in the temperature adjusting unit is performed.

### (Steps S1 to S2: Stroke changing step)

In the stroke changing step, the following work is performed when the movement range of the first drive unit 34 is changed.

First, a value is obtained by subtracting a stroke necessary for inserting and extracting the core mold 31 from a value of a maximum movement range of the first drive unit 34. Then, a member having a height corresponding to the above obtained value is prepared as the spacer member 49 to be used in the first drive unit 34 (S1: a preparing step of a spacer member). Then, the spacer member 49 that has been prepared is attached to the upper surface of the first movable plate 41 (S2: an attaching step of the spacer member). Accordingly, the movement range of the first drive unit 34 becomes the same with the stroke necessary for inserting and extracting the core mold 31.

Similarly, in the stroke changing step, the following work is performed when the movement range of the second drive unit 35 is changed.

First, a value is obtained by subtracting a stroke necessary for inserting and extracting the preform 11 from the cavity mold 32 from a value of a maximum movement range of the second drive unit 35. Then, a member having a height corresponding to the above obtained value is prepared as the spacer member 59 to be used in the second drive unit 35 (S1: the preparing step of the spacer member). Then, the spacer member 59 that has been prepared is attached to the lower surface of the second movable plate 51 (S2: the attaching step of the spacer member). Accordingly, the movement range of the second drive unit 35 becomes the same with the stroke necessary for inserting and extracting the preform 11 from the cavity mold 32.

When the stroke changing step is completed, the respective steps (blow molding cycle) in the blow molding method to be described below are performed. Note that the stroke changing step is desirably performed simultaneously with the step of attaching a mold for the injection molding unit, a mold for the temperature adjusting unit, a mold for the blow molding unit, and a mold for the taking-out unit to the blow molding apparatus 20.

### (Step S101: Injection molding step)

First, in the injection molding unit 21, a resin is injected from the injection device 25 into a preform-shaped mold space formed with the injection cavity mold, the injection core mold, and the neck mold 27 of the conveyance mechanism 26, and the preform 11 is manufactured.

In step S101, the injection molding unit 21 is opened immediately after filling of the resin ends or after a minimum cooling time provided after the resin is filled. That is, the preform 11 in a high temperature state in which the outer shape of the preform 11 can be maintained is released from the injection cavity mold and the injection core mold. Then, the rotary plate 26a of the conveyance mechanism 26 rotates by a predetermined angle, and the preform 11 held by the neck mold 27 is conveyed to the temperature adjusting unit 22.

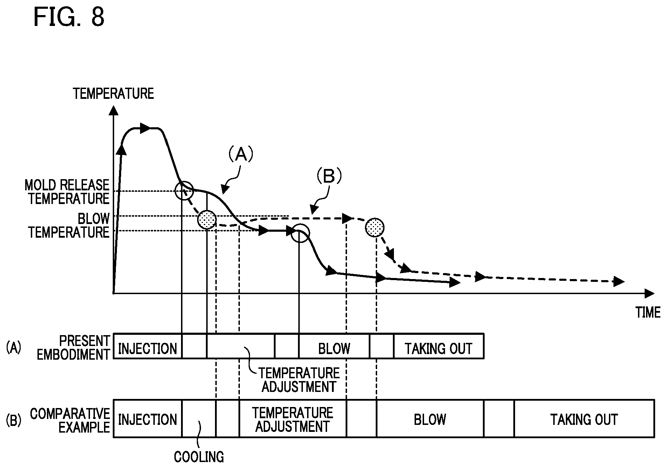

Here, a temperature change of the preform 11 in the blow molding method in the present embodiment will be described with reference to Fig. 8. The vertical axis of Fig. 8 represents the temperature of the preform, and the horizontal axis of Fig. 8 represents the time. In Fig. 8, an example of temperature changes of the preform in the present embodiment is indicated by (A) of Fig. 8. In addition, an example of temperature changes of a preform in a comparative example (conventional method) to be described later is indicated by (B) of Fig. 8. Note that blanks between the respective steps mean the time required to convey the preform or the container, and are identical to one another.

In the present embodiment, when a resin material is injected at a temperature equal to or higher than the melting point of the resin material, the injection molding unit 21 conducts only minimum cooling of the preform 11 that has been subjected to the injection molding, and the temperature adjusting unit 22 cools the preform 11 and adjusts the temperature of the preform 11. In the present embodiment, after the injection molding unit 21 completes the injection of the resin material, the time (cooling time) for cooling the resin material is preferably 1/2 or less the time (injection time) for injecting the resin material. In addition, the time for cooling the resin material can be made shorter than the time for injecting the resin material in accordance with the weight of the resin material. The time for cooling the resin material is more preferably 2/5 or less, still more preferably 1/4 or less, and particularly preferably 1/5 or less the time for injecting the resin material. The cooling time is significantly shortened as compared with that in the comparative example. Thus, a skin layer (surface layer in a solidified state) of the preform is formed thinner than a conventional one, and a core layer (inner layer in a softened or molten state) is formed thicker than the conventional one. That is, as compared with the comparative example, a preform having a large thermal gradient between the skin layer and the core layer and having high residual heat at a high temperature is formed.

In the present embodiment, the preform that has been injection-molded is released from the injection molding unit 21 at a higher release temperature than that in the comparative example, and is conveyed to the temperature adjusting unit 22. With the movement to the temperature adjusting unit 22, the temperature of the preform is equalized by heat exchange (heat conduction) between the skin layer and the core layer. Further, the preform is slightly cooled from the outer surface by contact with the outside air. However, the temperature of the preform is maintained at a substantially high release temperature, until the preform is conveyed to the temperature adjusting unit 22. In the temperature adjusting unit 22, the temperature of the preform decreases from the high release temperature to a blow temperature, and then the temperature of the preform is maintained at the blow temperature until blow molding is conducted.

Note that the blow temperature is a temperature suitable for the blow molding, and is set to 90°C to 105°C for a PET resin, for example. However, a lower blow temperature makes the stretching orientation of the preform better, and is capable of enhancing the strength (physical property) of the container. For this reason, the blow temperature is preferably set to 90°C to 95°C for a PET resin, for example.

Here, due to the structure of the blow molding apparatus 20, the injection molding step, the temperature adjusting step, the blow molding step, and the container taking-out step respectively have the same lengths of time. Similarly, the conveyance times between the respective steps are the same.

On the other hand, as the comparative example, a description will be given with regard to an example of temperature changes of the preform ((B) of Fig. 8) in a case where the preform is cooled in the injection molding step.

In the comparative example, the preform is cooled to a temperature lower than or substantially the same as the blow temperature in the mold of the injection molding unit 21. As a result, in the comparative example, the time of the injection molding step is longer than that in the present embodiment. In such a case, the times of the respective steps are set in accordance with the time of the longest injection molding step. Hence, the time of the molding cycle of the container also becomes long as a result.

### (Step S102: Temperature adjusting step)

Subsequently, the temperature adjusting unit 22 makes a temperature adjustment for bringing the temperature of the preform 11 close to a temperature suitable for a final blow.

In the temperature adjusting step, first, driving of the second drive unit 35 causes the preform 11 to be accommodated in the temperature adjusting space 33 of the cavity mold 32. In this situation, the second lock portion 56 is in the locked state, and the downward movement of the cavity mold 32 supported by the second movable plate 51 is restricted.

Subsequently, driving of the first drive unit 34 causes the core mold 31 to be inserted into the preform 11. In this situation, the first lock portion 46 is in the locked state, and the upward movement of the core mold 31 supported by the first movable plate 41 is restricted.

After that, the cooling air is introduced into the preform 11 from the air supply path of the core mold 31, and the cooling air is exhausted from the exhaust path of the core mold 31 (the cooling blow is conducted). The preform 11 is cooled from the inside by such convection of the cooling air. In this situation, the preform 11 is continuously in contact with the cavity mold 32. Therefore, the temperature of the preform 11 is adjusted and the preform 11 is cooled so that the temperature does not become equal to or lower than a temperature suitable for the blow molding from the outside, and the uneven temperature generated from injection molding is also reduced. Note that the temperature adjusting space 33 of the cavity mold 32 has substantially the same shape as the preform 11, and the shape of the preform 11 does not change greatly in the temperature adjusting unit 22. Note that the cavity mold 32 may be configured with a pair of split molds, and a preliminary blow (a process of temporarily bulging the preform to a size smaller than the container with the compressed air before the final blow) may be conducted before the cooling blow.

When the cooling and the temperature adjustment of the preform 11 end, the locked states of the first lock portion 46 and the second lock portion 56 are both released, and the cavity mold 32 and the core mold 31 are retracted. Then, the rotary plate 26a of the conveyance mechanism 26 rotates by a predetermined angle, and the preform 11 that has been subject to the temperature adjustment and that is held by the neck mold 27 is conveyed to the blow molding unit 23.

### (Step S103: Blow molding step)

Subsequently, the container is blow-molded in the blow molding unit 23.

First, the blow molding mold is closed to accommodate the preform 11 in the mold space, and the blow core mold and the stretching rod are inserted into the neck portion of the preform 11. Then, the blow air is introduced into the preform 11 from the blow core mold while the stretching rod is being moved down. Accordingly, the preform 11 is bulged and shaped to be in close contact with the mold space of the blow molding mold, and is blow-molded into a container.

### (Step S104: Container taking-out step)

When the blow molding ends, the blow molding mold is opened. Accordingly, the container becomes movable from the blow molding unit 23.

Subsequently, the rotary plate 26a of the conveyance mechanism 26 rotates by a predetermined angle, and the container is conveyed to the taking-out unit 24. In the taking-out unit 24, the neck portion of the container is released from the neck mold 27, and the container is taken out to the outside of the blow molding apparatus 20.

Heretofore, a series of steps in the blow molding method ends. Then, the rotary plate 26a of the conveyance mechanism 26 is rotated by a predetermined angle, so that the respective steps of S101 to S104 described above are repeated.

Hereinafter, advantages of the blow molding apparatus and the blow molding method in the present embodiment will be described.

In a case where a hot parison type preform is molded with a crystalline thermoplastic resin (a resin that can be in a transparent amorphous state or a cloudy crystalline state) used as a material, whitening (cloudiness) may occur due to insufficient cooling depending on the material. For example, in a case where a PET resin is used as a material, when the preform is slowly cooled (for example, cooled at room temperature for several tens of seconds) in a temperature zone (120°C to 200°C) in which crystallization is promoted, crystallization due to spherulite formation occurs, and the preform tends to be whitened.

For this reason, conventionally, the injection molding mold of the preform is rapidly cooled (for example, at 10°C for five seconds) to shorten the passage time in the above crystallization temperature zone, and the preform is sufficiently cooled in the injection molding step to suppress whitening of the preform.

On the other hand, according to the blow molding method in the present embodiment, the step of cooling the preform 11 is almost eliminated in the injection molding step (S101), and the preform is cooled in the temperature adjusting step (S102). In the temperature adjusting step (S102), by introducing the cooling air into the preform 11 and also bringing the preform 11 into close contact with the cavity mold 32, the preform 11 can be cooled simultaneously with the temperature adjustment of the preform 11. In the present embodiment, the temperature adjustment and cooling of the preform 11 can be conducted in the temperature adjusting step (S102). Thus, it is possible to release the preform 11 even in a high temperature state in the injection molding step (S101), and to start molding the next preform 11 early. That is, according to the present embodiment, the container can be favorably molded, while the molding cycle time is shortened as compared with the molding cycle time in the comparative example.

Further, according to the blow molding method in the present embodiment, in the stroke changing step (S1 to S2), the movement range of the first drive unit 34 is adjusted to a stroke necessary for inserting and extracting the core mold 31 and the movement range of the second drive unit 35 is adjusted to a stroke necessary for inserting and extracting the preform 11 from the cavity mold 32.

Accordingly, the strokes of the first drive unit 34 and the second drive unit 35 of the temperature adjusting unit 22 can be optimized in accordance with the dimensions of the preform, and the first drive unit 34 and the second drive unit 35 do not have to be moved excessively in the temperature adjusting step (S102), as compared with a case where such adjustments are not made. Therefore, in the present embodiment, the operation time of the machine is shortened before and after the temperature adjustment and cooling of the preform 11.

In other words, by shortening the operation time of the machine in the temperature adjusting step, the time for temperature adjustment and cooling of the preform 11 becomes extendable within a certain molding cycle time accordingly. Therefore, according to the present embodiment, the cooling effect of the preform 11 in the temperature adjusting step is enhanced, and thus the molding cycle time is easily shortened.

In addition, according to the present embodiment, when the cooling air is introduced into the preform 11 for cooling in the temperature adjusting step, the upward movements of the core mold 31 and the first movable plate 41 are restricted by the operation of the first lock portion 46, and the downward movements of the cavity mold 32 and the second movable plate 51 are restricted by the operation of the second lock portion 56.

Accordingly, the mold opening of the core mold 31 or the cavity mold 32 is suppressed, when the cooling air is introduced into the preform 11 in the temperature adjusting step. In addition, it is not necessary to upsize the actuator as a countermeasure for the mold opening described above. The first lock portion 46 and the second lock portion 56 enable an enhancement in the mold holding force of the temperature adjusting unit 22, as compared with a standard case without these configurations.

That is, according to the present embodiment, the mold opening of the core mold 31 or the cavity mold 32 can be suppressed, while a decrease in the operation speed of the apparatus in accordance with upsizing of the actuator is avoided. Moreover, according to the present embodiment, a decrease in the operation speed and an increase in the occupied space in accordance with the upsizing of the actuator can be avoided.

The present invention is not limited to the above embodiments, and various improvements and design changes may be made without departing from the scope of the appended claims.

In addition, the embodiments disclosed herein are to be considered in all respects as illustrative and non-limiting ones.

### Reference Signs List

- 11: Preform
- 20: Blow molding apparatus
- 21: Injection molding unit
- 22: Temperature adjusting unit
- 23: Blow molding unit
- 31: Core mold
- 32: Cavity mold
- 34: First drive unit
- 35: Second drive unit
- 41: First movable plate
- 44: First rod
- 46: First lock portion
- 47: First stroke changing portion
- 49: Spacer member
- 51: Second movable plate
- 54: Second rod
- 56: Second lock portion
- 57: Second stroke changing portion

## Claims

1. A blow molding apparatus (20) comprising:
an injection molding unit (21) configured to injection-mold a preform (11) having a bottomed shape and made of a resin;
a temperature adjusting unit (22) configured to perform a temperature adjustment of the preform (11) by supplying the preform (11) that has been released from the injection molding unit (21) with cooling air; and
a blow molding unit (23) configured to blow-mold the preform (11) after the temperature adjustment to manufacture a container made of the resin, wherein
the temperature adjusting unit (22) includes:
a first drive unit (34) configured to drive a core mold (31), from which the cooling air is supplied, in a first direction to insert the core mold (31) into the preform (11);
a second drive unit (35) configured to drive a cavity mold (32) that accommodates the preform (11) in a second direction opposite to the first direction to accommodate the preform (11) in the cavity mold (32);
a first lock portion (46) configured to restrict a movement of the first drive unit (34) in the second direction at a first position where the core mold (31) is inserted into the preform (11); and
a second lock portion (56) configured to restrict a movement of the second drive unit (35) in the first direction at a second position where the preform (11) is accommodated in the cavity mold (32).

2. The blow molding apparatus (20) according to claim 1, wherein
the first drive unit (34) includes:
a first movable plate (41) configured to support the core mold (31); and
a first rod (44) configured to extend in the second direction from the first movable plate (41) to move together with the first movable plate (41),
the first lock portion (46) includes a lock piece (46a) configured to move forward and backward in a direction intersecting the second direction, and
the lock piece (46a) interferes with the first rod (44) that has moved in the first direction when extending, and restricts a movement of the first movable plate (41) in the second direction.

3. The blow molding apparatus (20) according to claim 1 or 2, wherein
the second drive unit (35) includes:
a second movable plate (51) configured to support the cavity mold (32); and
a second rod (54) configured to extend in the first direction from the second movable plate (51) to move together with the second movable plate (51),
the second lock portion (56) includes a lock piece (46a) configured to move forward and backward in a direction intersecting the first direction, and
the lock piece (46a) interferes with the second rod (54) that has moved in the second direction when extending, and restricts a movement of the second movable plate (51) in the first direction.

4. The blow molding apparatus (20) according to claim 3, wherein
the second lock portion (56) further includes a receiving portion (56c) configured to convert a movement of the lock piece (46a) in an extending direction into force in the second direction.

5. A blow molding method comprising:
injection-molding a preform (11) having a bottomed shape and made of a resin;
performing a temperature adjustment of the preform (11) by supplying the preform (11) that has been released after injection molding with cooling air; and
blow-molding the preform (11) after the temperature adjustment to manufacture a container made of the resin, wherein
in the performing the temperature adjustment,
a core mold (31), from which the cooling air is supplied, is driven by a first drive unit (34) in a first direction, and the core mold (31) is inserted into the preform (11),
a cavity mold (32) that accommodates the preform (11) is driven by a second drive unit (35) in a second direction opposite to the first direction, and the preform (11) is accommodated in the cavity mold (32),
a movement of the first drive unit (34) is restricted by a first lock portion (46) in the second direction at a first position where the core mold (31) is inserted into the preform (11), and
a movement of the second drive unit (35) is restricted by a second lock portion (56) in the first direction at a second position where the preform (11) is accommodated in the cavity mold (32).

6. The blow molding method according to claim 5, wherein
in the injection molding, after injection of a resin material is completed, a time for cooling the resin material in a mold space is equal to or shorter than 1/2 a time for injecting the resin material into the mold space.

7. The blow molding method according to one of claims 5 to 6, wherein in the injection molding, the preform (11) in a high temperature state in which an outer shape of the preform (11) is maintainable is released from a mold.

## Patentansprüche

1. Blasformvorrichtung (20), umfassend:
eine Spritzgusseinheit (21), die dazu ausgelegt ist, einen Blasrohling (11), der eine mit einem Boden versehene Form aufweist und aus einem Harz besteht, spritzzugießen;
eine Temperatureinstelleinheit (22), die dazu ausgelegt ist, eine Temperatureinstellung des Blasrohlings (11) durch Zufuhr von Kühlluft zum Blasrohling (11), der von der Spritzgusseinheit (21) freigegeben wurde, durchzuführen; und
eine Blasformeinheit (23), die dazu ausgelegt ist, nach der Temperatureinstellung den Blasrohling (11) blaszuformen, um einen aus dem Harz bestehenden Behälter herzustellen, wobei
die Temperatureinstelleinheit (22) Folgendes umfasst:
eine erste Antriebseinheit (34), die dazu ausgelegt ist, eine Kernform (31), aus der die Kühlluft zugeführt wird, in einer ersten Richtung voranzutreiben, um die Kernform (31) in den Blasrohling (11) einzubringen;
eine zweite Antriebseinheit (35), die dazu ausgelegt ist, eine Hohlraumform (32), welche den Blasrohling (11) aufnimmt, in einer zweiten Richtung entgegengesetzt zur ersten Richtung voranzutreiben, um den Blasrohling (11) in der Hohlraumform (32) aufzunehmen;
einen ersten Verriegelungsabschnitt (46), der dazu ausgelegt ist, eine Bewegung der ersten Antriebseinheit (34) in einer ersten Position, in der die Kernform (31) in den Blasrohling (11) eingebracht ist, in die zweite Richtung einzuschränken; und
einen zweiten Verriegelungsabschnitt (56), der dazu ausgelegt ist, eine Bewegung der zweiten Antriebseinheit (35) in einer zweiten Position, in der der Blasrohling (11) in der Hohlraumform (32) aufgenommen ist, in die erste Richtung einzuschränken.

2. Blasformvorrichtung (20) nach Anspruch 1, wobei
die erste Antriebseinheit (34) Folgendes umfasst:
eine erste bewegbare Platte (41), die dazu ausgelegt ist, die Kernform (31) zu tragen; und
einen ersten Stab (44), der dazu ausgelegt ist, sich von der ersten bewegbaren Platte (41) aus in die zweite Richtung zu erstrecken, um sich zusammen mit der ersten bewegbaren Platte (41) zu bewegen,
wobei der erste Verriegelungsabschnitt (46) ein Verriegelungsteil (46a) umfasst, das dazu ausgelegt ist, sich in einer Richtung, die die zweite Richtung kreuzt, vorwärts und rückwärts zu bewegen, und
wobei das Verriegelungsteil (46a) mit dem ersten Stab (44), welcher sich beim Erstrecken in die erste Richtung bewegt hat, in Eingriff gelangt und eine Bewegung der ersten bewegbaren Platte (41) in die zweite Richtung einschränkt.

3. Blasformvorrichtung (20) nach Anspruch 1 oder 2, wobei
die zweite Antriebseinheit (35) Folgendes umfasst:
eine zweite bewegbare Platte (51), die dazu ausgelegt ist, die Hohlraumform (32) zu tragen; und
ein zweiter Stab (54), der dazu ausgelegt ist, sich von der zweiten bewegbaren Platte (51) aus in die zweite Richtung zu erstrecken, um sich zusammen mit der zweiten bewegbaren Platte (51) zu bewegen,
wobei der zweite Verriegelungsabschnitt (56) ein Verriegelungsteil (46a) umfasst, das dazu ausgelegt ist, sich in einer Richtung, die die erste Richtung kreuzt, vorwärts und rückwärts zu bewegen, und
wobei das Verriegelungsteil (46a) mit dem zweiten Stab (54), welcher sich beim Erstrecken in die zweite Richtung bewegt hat, in Eingriff gelant und eine Bewegung der zweiten bewegbaren Platte (51) in die erste Richtung einschränkt.

4. Blasformvorrichtung (20) nach Anspruch 3, wobei
der zweite Verriegelungsabschnitt (56) ferner einen Aufnahmeabschnitt (56c) umfasst, der dazu ausgelegt ist, eine Bewegung des Verriegelungsteils (46a) in eine Erstreckungsrichtung in eine Kraft in der zweiten Richtung umzuwandeln.

5. Blasformverfahren, umfassend:
Spritzgießen eines Blasrohlings (11), der eine mit einem Boden versehene Form aufweist und aus einem Harz besteht,
Durchführen einer Temperatureinstellung des Blasrohlings (11) durch Zufuhr von Kühlluft zum Blasrohling (11), der nach dem Spritzgießen freigegeben wurde; und
Blasformen des Blasrohlings (11) nach der Temperatureinstellung, um einen aus dem Harz bestehenden Behälter herzustellen, wobei
beim Durchführen der Temperatureinstellung
eine Kernform (31), aus der die Kühlluft zugeführt wird, durch eine erste Antriebseinheit (34) in einer ersten Richtung vorangetrieben wird und die Kernform (31) in den Blasrohling (11) eingebracht wird,
eine Hohlraumform (32), welche den Blasrohling (11) aufnimmt, durch eine zweite Antriebseinheit (35) in einer zweiten Richtung entgegengesetzt zur ersten Richtung vorangetrieben wird und der Blasrohling (11) in der Hohlraumform (32) aufgenommen wird,
eine Bewegung der ersten Antriebseinheit (34) in einer ersten Position, in der die Kernform (31) in den Blasrohling (11) eingebracht ist, durch einen ersten Verriegelungsabschnitt (46) in die zweite Richtung eingeschränkt wird; und
eine Bewegung der zweiten Antriebseinheit (35) in einer zweiten Position, in der der Blasrohling (11) in der Hohlraumform (32) aufgenommen ist, durch einen zweiten Verriegelungsabschnitt (56) in die erste Richtung eingeschränkt wird.

6. Blasformverfahren nach Anspruch 5, wobei
beim Spritzgießen, nachdem das Einspritzen eines Harzmaterials abgeschlossen wurde, eine Dauer des Abkühlens des Harzmaterials in einem Formraum gleich oder kürzer ist als die Hälfte einer Dauer des Einspritzens des Harzmaterials in den Formraum.

7. Blasformverfahren nach einem der Ansprüche 5 bis 6, wobei
beim Spritzgießen der Blasrohling (11) in einem Hochtemperaturzustand, in dem eine Außenform des Blasrohlings (11) aufrechterhaltbar ist, aus einer Form freigegeben wird.

## Revendications

1. Appareil de moulage par soufflage (20), comprenant :
une unité de moulage par injection (21) configurée pour mouler par injection une préforme (11) présentant une forme munie d'un fond et constituée d'une résine ;
une unité d'ajustement de température (22) configurée pour effectuer un ajustement de température de la préforme (11) en alimentant la préforme (11) qui a été libérée de l'unité de moulage par injection (21) avec de l'air de refroidissement ; et
une unité de moulage par soufflage (23) configurée pour mouler par soufflage la préforme (11) après l'ajustement de température afin de fabriquer un contenant réalisé en la résine, dans lequel
l'unité d'ajustement de température (22) inclut :
une première unité d'entraînement (34) configurée pour entraîner un moule central (31), à partir duquel l'air de refroidissement est fourni, dans une première direction pour insérer le moule central (31) dans la préforme (11) ;
une seconde unité d'entraînement (35) configurée pour entraîner un moule à cavité (32) qui reçoit la préforme (11) dans une seconde direction opposée à la première direction afin de recevoir la préforme (11) dans le moule à cavité (32) ;
une première partie de verrouillage (46) configurée pour restreindre un déplacement de la première unité d'entraînement (34) dans la seconde direction à une première position dans laquelle le moule central (31) est inséré dans la préforme (11) ; et
une seconde partie de verrouillage (56) configurée pour restreindre un déplacement de la seconde unité d'entraînement (35) dans la première direction à une seconde position dans laquelle la préforme (11) est reçue dans le moule à cavité (32).

2. Appareil de moulage par soufflage (20) selon la revendication 1, dans lequel
la première unité d'entraînement (34) inclut :
une première plaque mobile (41) configurée pour supporter le moule central (31) ; et
une première tige (44) configurée pour s'étendre dans la seconde direction à partir de la première plaque mobile (41) pour se déplacer conjointement avec la première plaque mobile (41),
la première partie de verrouillage (46) inclut une pièce de verrouillage (46a) configurée pour se déplacer vers l'avant et vers l'arrière dans une direction recoupant la seconde direction, et
la pièce de verrouillage (46a) interfère avec la première tige (44) qui s'est déplacée dans la première direction lorsqu'elle s'étend, et restreint un déplacement de la première plaque mobile (41) dans la seconde direction.

3. Appareil de moulage par soufflage (20) selon la revendication 1 ou 2, dans lequel
la seconde unité d'entraînement (35) inclut :
une seconde plaque mobile (51) configurée pour supporter le moule à cavité (32) ; et
une seconde tige (54) configurée pour s'étendre dans la première direction à partir de la seconde plaque mobile (51) afin de se déplacer conjointement avec la seconde plaque mobile (51),
la seconde partie de verrouillage (56) inclut une pièce de verrouillage (46a) configurée pour se déplacer vers l'avant et vers l'arrière dans une direction recoupant la première direction, et
la pièce de verrouillage (46a) interfère avec la seconde tige (54) qui s'est déplacée dans la seconde direction lorsqu'elle s'étend, et restreint un déplacement de la seconde plaque mobile (51) dans la première direction.

4. Appareil de moulage par soufflage (20) selon la revendication 3, dans lequel
la seconde partie de verrouillage (56) inclut en outre une partie de réception (56c) configurée pour convertir un déplacement de la pièce de verrouillage (46a) dans une direction d'extension en force dans la seconde direction.

5. Procédé de moulage par soufflage comprenant les étapes consistant à :
mouler par injection une préforme (11) présentant une forme munie d'un fond et réalisée en une résine ;
effectuer un ajustement de température de la préforme (11) en alimentant la préforme (11) qui a été libérée après moulage par injection avec de l'air de refroidissement ; et
mouler la préforme (11) par soufflage après l'ajustement de température pour fabriquer un contenant réalisé en la résine, dans lequel
lors du déroulement de l'ajustement de température,
un moule central (31), à partir duquel l'air de refroidissement est fourni, est entraîné par une première unité d'entraînement (34) dans une première direction, et le moule central (31) est inséré dans la préforme (11),
un moule à cavité (32) qui reçoit la préforme (11) est entraîné par une seconde unité d'entraînement (35) dans une seconde direction opposée à la première direction, et la préforme (11) est reçue dans le moule à cavité (32),
un déplacement de la première unité d'entraînement (34) est restreint par une première partie de verrouillage (46) dans la seconde direction à une première position où le moule central (31) est inséré dans la préforme (11), et
un déplacement de la seconde unité d'entraînement (35) est restreint par une seconde partie de verrouillage (56) dans la première direction à une seconde position dans laquelle la préforme (11) est reçue dans le moule à cavité (32).

6. Procédé de moulage par soufflage selon la revendication 5, dans lequel lors du moulage par injection, après que l'injection d'un matériau de résine soit terminée, un temps pour refroidir le matériau de résine dans un espace de moule est égal ou inférieur à la moitié d'un temps d'injection du matériau de résine dans l'espace de moule.

7. Procédé de moulage par soufflage selon l'une des revendications 5 à 6, dans lequel, dans le moulage par injection, la préforme (11) dans un état de température élevée dans lequel une forme extérieure de la préforme (11) peut être maintenue est libérée d'un moule.
